# EUROPÄISCHE PATENTANMELDUNG

(11) **EP 3 955 077 A1**
(43) Veröffentlichungstag der Anmeldung: **16.02.2022**
(21) Anmeldenummer: 21188888.8
(22) Anmeldetag: 30.07.2021
(51) Int. Cl.: G05B 23/02, G06Q 10/06, G06Q 10/00

(54) **STEUERUNGSEINRICHTUNG EINER BETRIEBSANLAGE**

(30) Priorität: 12.08.2020 DE 102020121199
(71) Anmelder: AyTec Automation GmbH, 93098 Mintraching (DE)
(72) Erfinder: RUHLAND, Christian, 93161 Sinzing (DE)
(74) Vertreter: Glück Kritzenberger Patentanwälte PartGmbB

(57) **Zusammenfassung**

Die Erfindung betrifft eine Steuerungseinrichtung (40) einer Betriebsanlage (10), welche Steuerungseinrichtung (40) folgende Merkmale aufweist:
- einen Steuerungscomputer (42) mit Eingängen für Signalleitungen von Antrieben (13, 23, 28) und/oder Sensoren (24, 30) der Betriebsanlage (10),
- eine Eingabe/Ausgabevorrichtung (46, 48) für die Bedienung der Steuerungseinrichtung (40),
- ein mit dem Steuerungscomputer (42) verbundenes Fehlermodul (44), mit
- einer Fehlererkennungsschaltung (50), die konzipiert ist, Signale (A - F) auf den Signalleitungen über die Zeit aufzuzeichnen, und die Signale (A - F) und/oder den Signalverlauf über die Zeit mit in einem Referenzwertspeicher (58) abgespeicherten Referenzwerten zu vergleichen und bei Überschreitung der Referenzwerte ein Fehlersignal auszugeben, welches einen Fehlertyp mit Aussagen zur Art des Signals und der Art der Überschreitung des Referenzwerts enthält,
- eine Unterbrechungsschaltung (52), die mit den Antrieben (13, 23, 28) der Anlage verbunden und konzipiert ist, nach Erhalt des Fehlersignals den automatischen Betrieb der Betriebsanlage (10) zu unterbrechen,
- mit einer Aufzeichnungseinheit (54), die konzipiert ist, im Fall der Unterbrechung des automatischen Betriebs der Betriebsanlage (10) zumindest einige, vorzugsweise alle von einer Person über die Eingabe/Ausgabevorrichtung (46, 48) eingegebenen Eingabedaten bis zum erneuten Start der automatischen Steuerung der Betriebsanlage (10) zu erfassen und verknüpft mit dem Fehlertyp abzuspeichern,
- mit einer Anweisungsschaltung (56), die konzipiert ist, bei Auftreten eines Fehlers den Fehlertyp aus dem Fehlersignal auszulesen und die diesem Fehlertyp zugeordneten gespeicherten Eingabedaten als Ausgabedaten auf der Eingabe/Ausgabevorrichtung (46, 48) anzuzeigen.

## Beschreibung

Die Erfindung betrifft eine Steuerungseinrichtung einer Betriebsanlage, welche Steuerungseinrichtung folgende Merkmale aufweist:
- einen Steuerungscomputer, der Eingänge für Signalleitungen von Antrieben und/oder Sensoren der Betriebsanlage als auch eine Eingabe/Ausgabevorrichtung für die Bedienung der Steuerungseinrichtung aufweist, sowie ein Fehlermodul mit einer Fehlererkennungsschaltung, die konzipiert ist, Signale auf den Signalleitungen über die Zeit aufzuzeichnen, und die Signale und/oder den Signalverlauf über die Zeit mit Referenzwerten zu vergleichen und bei Überschreitung der Referenzwerte ein Fehlersignal auszugeben, welches vorzugsweise auch einen Fehlertyp mit Aussagen zur Art des Signals und der Art der Überschreitung des Referenzwerts enthält, und mit einer Unterbrechungsschaltung, die mit den Antrieben der Anlage verbunden und konzipiert ist, nach Erhalt des Fehlersignals den automatischen Betrieb der Betriebsanlage zu unterbrechen. Die Steuerungseinrichtung verfügt üblicherweise über einen Steuerungscomputer in Form eines Hochleistungscomputers oder Mikroprozessors, vorzugsweise in redundantem Aufbau, um die Steuerungs- und Überwachungsaufgaben programmgesteuert vornehmen zu können.

Derartige Steuerungseinrichtungen werden zur Absicherung einer Betriebsanlage verwendet, wie sie zum Beispiel durch Produktionsstraßen im Automobilbau gebildet sind. Von Nachteil ist hierbei, dass die Fehlererkennungsschaltung in der Regel dem Servicetechniker, der die Anlage wieder in Gang bringen will, zwar den Ort des Fehlers anzeigt. Wie schnell der Fehler jedoch behoben wird, hängt oftmals von der Qualifizierung des Servicetechnikers ab, insbesondere, ob er bereits mit einer derartigen Fehlersituation konfrontiert war. Gerade bei Produktionsstraßen oder -bändern im Automobilbau führen jedoch Ausfallzeiten aufgrund von Betriebsstörungen zu immensen Kosten.

Es ist daher Aufgabe der Erfindung eine Steuerungseinrichtung zu schaffen, die zu einer schnelleren Wieder-Inbetriebnahme der Betriebsanlage führt, zumindest weitgehend unabhängig von den Kenntnissen und Erfahrungen der Servicetechniker.

Diese Aufgabe wird bei einer Steuerungseinrichtung der gattungsgemäßen Art durch die kennzeichnenden Merkmale des Anspruchs 1 gelöst. Die Aufgabe wird ebenfalls durch ein Verfahren gemäß Anspruch 11 gelöst. Vorteilhafte Weiterbildungen der Erfindung sind Gegenstand der abhängigen Ansprüche. Vorteilhafte Weiterbildungen der Erfindung sind ebenfalls in der Beschreibung und in der Zeichnung beschreiben.

Erfindungsgemäß hat das Fehlermodul der Steuereinrichtung eine Aufzeichnungseinheit, die konzipiert ist, im Fall der Unterbrechung des automatischen Betriebs der Betriebsanlage zumindest einige, vorzugsweise alle von einer Person über die Eingabe/Ausgabevorrichtung eingegebenen Eingabedaten bis zum erneuten Start der automatischen Steuerung der Betriebsanlage zu erfassen. Zudem dient die Aufzeichnungseinheit zur Abspeicherung der erfassten Eingabedaten und zur Verknüpfung mit einem Fehlertyp, der entweder aus dem Fehlersignal erhalten wird oder der auch über die Eingabe/Ausgabevorrichtung manuell eingegeben werden kann. Das Fehlermodul hat zudem eine Anweisungsschaltung, die konzipiert ist, bei Auftreten eines Fehlers die diesem Fehlertyp zugeordneten gespeicherten Eingabedaten als Ausgabedaten auf der Eingabe/Ausgabevorrichtung zur Hilfestellung für den Servicetechniker bei der Fehlerbehebung anzuzeigen.

Auf diese Weise ist es der Steuerungseinrichtung möglich, Arbeitsschritte eines Servicetechnikers, der bereits einmal an der Beseitigung des gleichen Fehlers arbeitete und die Betriebsanlage wieder zur Funktion brachte, aufzuzeichnen und für die spätere Reparatur der Betriebsanlage wiederzugeben, um somit einem Servicetechniker vor Ort Hilfestellung bei der Reparatur zu geben. Dies führt zum einen zu einem standardisierten und schnelleren Reparaturverfahren und erlaubt die Reparatur der Betriebsanlage auch durch Servicetechniker, die noch nicht so viel Erfahrung in der Reparatur des Fehlers haben. Auf diese Weise werden Ausfallkosten der Betriebsanlage verringert, was gerade bei teuren Produktionsanlagen wie Kfz-Montagebändern zu erheblichen Einsparungen führt.

Wenn ein Fehlerfall auftritt, können dem Servicetechniker über die Ein/Ausgabeeinrichtung zum einen der Fehlertyp und die in der Aufzeichnungseinheit gespeicherten mit dem entsprechenden Fehlertyp verknüpften Eingabedaten angezeigt werden, welche bei einer bereits durchgeführten Fehlerbehebung des gleichen Fehlertyps zum Erfolg geführt hat.

Es gibt die unterschiedlichsten Fehlertypen, z.B. die Überschreitung einer Taktperiode für einen Arbeitsvorgang, was z.B. über optische Sensoren überwacht werden kann; die Überschreitung der aufgewendeten Kraft/Drehmoments für einen Arbeitsvorgang, Abweichung von Maschinen in ihrem Arbeitsweg etc. und schließlich eine Fehlereingabe z.B. über einen Not-Aus- Schalter, über welchen eine Fehlersituation durch eine Bedienperson manuell eingegeben wird. Jeder Servicetechniker, der einen Fehler jedweder Art in einem Fehlerfall behoben hat, kann über die Ein/Ausgabeeinrichtung seine Schritte zur Behebung des Fehlers manuell eingeben.

Falls die Behebung des Fehlers allein in einem Softwareeingriff bestand, können auch seine über die Tastatur eingegebenen Eingaben und Programmbefehle gespeichert werden und später bei gleichen Fehlertypen aufgerufen oder automatisch ausgeübt werden. Dies ist zum Beispiel der Fall, wenn eine Gerätesteuerung zurückgesetzt oder eine Software oder Firmware aktualisiert werden muss. Mit den Eingabedaten wird vorzugsweise auch die Zeit gespeichert, die der Servicetechniker zur Wiederinbetriebnahme der Betriebsanlage benötigt. Dies kann dann für spätere Fehlersituationen dahingehend genutzt werden, dass die Fehlerbehebung entsprechend den Eingabedaten durchgeführt wird, die in der kürzesten Zeit zur Wiederinbetriebnahme der Betriebsanlage geführt haben. Vorzugsweise werden somit zusammen mit den Eingabedaten auch der Beginn und das Ende der Tätigkeit des Servicetechnikers und/oder die Ausfallzeit der Betriebsanlage erfasst, so dass die gesamte Arbeitszeit bis zur Behebung des Fehlers evaluiert werden kann.

Vorzugsweise die Aufzeichnungseinheit eine Kommentarfunktion, die es dem Servicetechniker ermöglicht, Tätigkeiten einzugeben, die er an der Betriebsanlage durchgeführt hat, um den Fehler zu beheben. So können beispielsweise nicht nur Tastaturbefehle aufgezeichnet werden, sondern der Servicetechniker kann über die Kommentarfunktion eine Anleitung zur Behebung des Fehlers eingeben.

Vorzugsweise ist die Fehlererkennungsschaltung konzipiert, Signale betreffend Drehmomente der Antriebe und/oder betreffend den zeitlichen Ablauf der Betätigung der Antriebe zu erhalten und zu verarbeiten. Auf diese Weise kann überprüft werden, ob automatisierte Vorgänge auf einmal längere Zeit als üblich benötigen und/oder ob der Kraftaufwand für automatisierte Tätigkeiten zunimmt, was zum Beispiel auf einen Verschleiß des entsprechenden Werkzeugs hinweist. Auf diese Weise lässt sich eine Betriebsanlage, wie z.B. eine Produktions- oder Abfüllanlage kontinuierlich und wirksam auf ihre Funktion prüfen.

Vorzugsweise werden die Signale bzw. Signalüberschreitungen gegenüber dem Referenzwert, oder auch Kombinationen verschiedener Signale oder Signalüberschreitungen einem Fehlertyp zugeordnet. Es ist somit möglich, den Fehlertyp bereits aufgrund der Signale, Signalüberschreitungen oder deren Kombination zu ermitteln. Herangezogen werden können hierbei vorzugsweise auch die Höhe der Signalüberschreitung einer Messgröße und/oder der zeitliche Verlauf einer Überschreitung oder Abweichung von einer Sollgröße.

In einer vorteilhaften Weiterbildung der Erfindung hat die Steuerungseinrichtung Eingänge für optische Sensoren, die im Bereich der Betriebsanlage angeordnet sind. Auf diese Weise lassen sich Betriebszyklen oder Bewegungsschemata von Robotern und automatisierten Werkzeugen überwachen und für die Fehlererkennung nutzen.

Vorzugsweise ist die Eingabe/Ausgabevorrichtung durch ein Display und eine Tastatur gebildet. Auf diese Weise kann ein Servicetechniker in einfacher Weise die von ihm durchgeführten Schritte zur Behebung des Fehlers eingeben bzw. am Display die zur Behebung des Fehlers durchzuführenden Schritte ablesen. Er kann selbstverständlich auch seinen eigenen Laptop als Eingabe/Ausgabevorrichtung der Steuerungseinrichtung nutzen, wenn er diesen kabelgebunden oder drahtlos oder via Internet mit dem Steuerungscomputer der Steuerungseinrichtung verbindet.

Vorzugsweise ist daher das Fehlermodul, insbesondere die Aufzeichnungseinheit konzipiert, im Fehlerfall die Eingabe/Ausgabevorrichtung freizuschalten, um einer Person die Eingabe von Textdaten in Zusammenhang mit einer Fehlerbehebung zu ermöglichen. Es/sie ist weiterhin konzipiert, die eingegebenen Textdaten zusammen mit den Eingabedaten korreliert zum Fehlertyp abzuspeichern und in einer späteren Fehlersituation anzuzeigen. Auf diese Weise können bei jedem Fehlerfall Daten gesammelt werden, die ein Servicetechniker zur Behebung des Fehlers unternimmt.

In einer vorteilhaften Weiterbildung der Erfindung ist die Aufzeichnungseinheit mit einer Bewertungsschaltung versehen, die konzipiert ist, die Eingabedaten von Fehlersituationen des gleichen Fehlertyps miteinander zu vergleichen und als Ausgabedaten diejenigen Eingabedaten zu verwenden, die mit den wenigsten Schritten und/oder in kürzester Unterbrechungszeit oder Reparaturzeit zu einem erneuten Start der Betriebsanlage geführt haben. Auf diese Weise kann ein zeitlich optimierter Weg zu Behebung des Fehlers seitens der Bewertungsschaltung selbsttätig ermittelt werden, so dass im Fehlerfall einem Servicetechniker der Weg angezeigt werden kann, der in kürzester Zeit zur Fehlerbehebung geführt hat. Dies verringert die Ausfallzeit der Betriebsanlage beträchtlich.

Vorzugsweise hat die Betriebsanlage Antriebe und Sensoren, die mit der Steuerungseinrichtung verbunden sind. Auf diese Weise kann die Betriebsanlage wirkungsvoll auf Fehler überwacht werden, bevor die Fehler einen Stillstand der Betriebsanlage verursachen. So kann die Betriebsanlage z.B. Förderantriebe und Montageantriebe und optische oder akustische bzw. elektromagnetische Überwachungssensoren enthalten, die über die Signalleitungen oder drahtlos mit der Steuerungseinrichtung verbunden sind. Die Antriebssignale, wie z.B. Stromzufuhr, Drehzahl etc als auch die Sensordaten werden dann ständig aufgezeichnet und tzur Überwachung der Betriebsanlage herangezogen.

Vorzugsweise ist die Betriebsanlage durch eine Montageanlage für die Montage von Kraftfahrzeugen oder Kraftfahrzeugteilen gebildet. In diesem Bereich macht sich nämlich ein Stillstand der Betriebsanlage besonders schmerzlich bemerkbar, weil deren Ausfallkosten pro Zeit extrem hoch sind. Durch die Erfindung lassen somit gerade in diesem Bereich erhebliche Einsparungen erzielen.

Die Erfindung betrifft ebenfalls ein Verfahren zur Steuerung einer Betriebsanlage, in welchem Signale von Antrieben und/oder Sensoren der Betriebsanlage erfasst und mit Referenzwerten verglichen werden, wobei bei Überschreitung der Signale der automatische Betrieb der Betriebsanlage unterbrochen und ein Fehlersignal ausgegeben wird, wobei entweder das Fehlersignal einen Fehlertyp mit Aussagen zur Art des Signals/Signale (A - F) und der Art der Überschreitung/en enthält oder ein Fehlertyp über eine Eingabe/Ausgabevorrichtung eingegeben wird, wobei im Fall der Unterbrechung des automatischen Betriebs der Betriebsanlage
- alle von einer Person über die Eingabe/Ausgabevorrichtung eingegebenen Eingabedaten bis zum erneuten Start der automatischen Steuerung der Betriebsanlage zumindest einmal pro Fehlertyp erfasst und gespeichert werden, und
- die dem Fehlertyp zugeordneten gespeicherten Eingabedaten als Ausgabedaten auf der Eingabe/Ausgabevorrichtung als Hilfe für einen Servicetechniker zur Behebung desselben Fehlertyps in einer späteren Fehlersituation angezeigt werden.

Die Eingabedaten müssen somit zumindest für jeden Fehlertyp wenigstens einmal erfasst werden, so dass diese dann bei späteren Fehlersituationen zur Hilfestellung des Servicetechnikers angezeigt werden können. Natürlich können bei jeder Fehlersituation die seitens des Servicetechnikers eingegebenen Daten erfasst und mit bereits abgespeicherten Eingabedaten aus einer früheren Fehlersituation vergleichen werden, um den schnellsten Weg zur Behebung des Fehlers zu eruieren. Die Eingabedaten werden somit für jeden Fehlertyp ständig optimiert.

Hinsichtlich der Merkmale und Vorteile des erfindungsgemäßen Verfahrens wird Bezug genommen auf die Beschreibung der erfindungsgemäßen Steuerungseinrichtung.

In dem Verfahren werden vorzugsweise die abgespeicherten Eingabedaten von Fehlersituationen des gleichen Fehlertyps miteinander verglichen und für zukünftige Fehlersituationen dieses Fehlertyps diejenigen Eingabedaten als Ausgabedaten verwendet, die mit den wenigsten Schritten und/oder in kürzester Zeit, d.h. Ausfallzeit oder Reparaturzeit, zu einem erneuten Start der automatischen Steuerung der Betriebsanlage geführt haben. Auf diese Weise können teure Ausfallzeiten einer Betriebsanlage minimiert werden.

In einer vorteilhaften Weiterbildung des erfindungsgemäßen Verfahrens wird in einer Fehlersituation die Eingabe von Textdaten über die Eingabe/Ausgabevorrichtung ermöglicht, welche Textdaten zusammen mit den Eingabedaten abgespeichert werden und in einer späteren Fehlersituation als Text-Ausgabedaten auf der Eingabe/Ausgabevorrichtung wiedergegeben werden. Auf diese Weise kann dem Servicetechniker auch eine Kommentierung bzw. Anleitung bei der Behebung des Fehlers an die Hand gegeben werden.

Vorzugsweise werden die Signale über die Zeit erfasst und mit zeitlichen Referenzverläufen zur Ableitung eines Fehlersignals und/oder zur Erkennung eines Fehlertyps verglichen. Ein Fehler kann z.B. nicht in einer Überschreitung oder Unterschreitung eines Sollwerts liegen, sondern auch in einer Veränderung des zeitlichen Verlaufs. So kann z.B. ein Vorgang langsamer oder schneller ablaufen als vorgesehen oder vorgegebene Beschleunigungen von Maschinenteilen werden unter/überschritten, ohne dass die Sollwerte für die Amplituden der Signale überschritten werden. Somit kann auch der zeitliche Verlauf eines Signals zur Auslösung eines Fehlersignals herangezogen werden. Zudem kann aus dem Signalverlauf bzw. dessen Abweichung von einem Referenzverlauf ein Fehlertyp abgeleitet werden. Dies gilt insbesondere für die Tätigkeit der Fehlererkennungsschaltung.

Es ist für den Fachmann offensichtlich, dass die oben beschriebenen Ausführungsbeispiele beliebig miteinander kombiniert werden können.

Folgende Ausdrücke werden synonym verwendet: Betriebsanlage - Produktionsanlage - Montagestraße;
Die Erfindung wird nachfolgend beispielsweise anhand der schematischen Zeichnung beschrieben. In dieser zeigen:
- Fig. 1: eine schematische Darstellung eines Teils einer Betriebsanlage mit einer Fördereinrichtung und einem Bearbeitungsroboter, und
- Fig. 2: eine schematische Darstellung der Steuereinrichtung für die Steuerung und Überwachung der Funktion der Betriebsanlage aus Fig. 1.

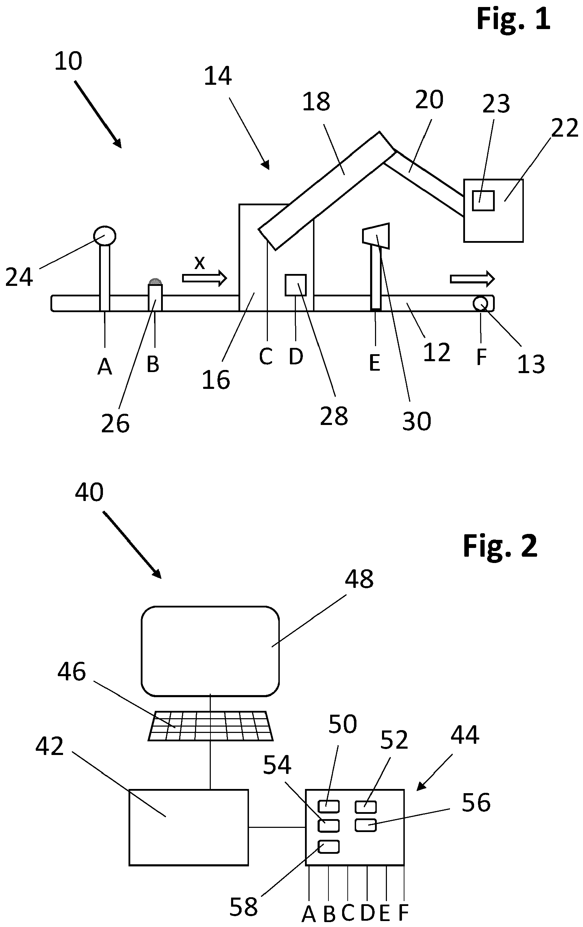

Fig. 1 zeigt einen Ausschnitt einer Betriebsanlage 10, die zum Beispiel Teil einer Produktionsstraße für den Kfz-Bau oder Kfz-Teile-Bau sein kann. Sie hat ein Förderband 12, das durch eine Antriebseinheit 13 angetrieben ist, um zu montierenden Teile, z.B. Kfz-Chassis in Förderrichtung x zu bewegen. An dem Förderband 12 ist ein Montageroboter 14, mit einem drehbaren Basiskörper 16 angeordnet, an welchem ein erstes Ende eines ersten Schwenkarms 18 drehbar angelenkt ist, an dessen zweitem Ende wiederum ein erstes Ende eines zweiten Schwenkarms 20 drehbar angelenkt ist. Am zweiten Ende des zweiten Schwenkarms 20 ist eine Bearbeitungseinheit 22 getragen, die zum Beispiel einen Greifer und einen Schrauber umfasst, die zusammen schematisch mit dem Bezugszeichen 23 bezeichnet sind.

An dem Förderband 12 ist zudem ein optischer Sensor 24 angeordnet, welcher zur Überwachung des Zufuhrtakts der zu montierenden Teile dient und ein erstes Signal A abgibt. Des Weiteren ist in der Nähe des Montageroboters 14 ein manueller Not-Aus-Schalter 26 angeordnet, welcher als zweites Signal ein Not-Aus Signal B abgibt. Über die Stellmotoren des Montageroboters, hier schematisch mit dem Bezugszeichen 28 bezeichnet, werden als vierte Signale Betätigungssignale D hinsichtlich der Betätigung aller Stellmotoren des Montageroboters 14 erhalten, wie z.B. Stromfluss, Rotationsgeschwindigkeit, sowohl des Basiskörpers 16, als auch der beiden Schwenkarme 20, 22 und eines Stellmotors zur schwenkbaren Anlenkung der Betätigungseinheit 22 am zweiten Ende des zweiten Schwenkarms 20.

Von dem Greifer und dem Schrauber 23 werden als dritte Signale Betätigungssignale C abgegriffen, die zum Beispiel den Stromfluss, und die Rotationsgeschwindigkeit enthalten.

In der Nähe des Montageortes der Betätigungseinheit 22 des Montageroboters 14 ist ein Überwachungssensor 30 angeordnet, der insbesondere ein an sich bekannter Positionssensor, z.B. auf optischer oder elektro-magnetischer Basis ist. Dieser Überwachungssensor 30, der die Tätigkeit der Betätigungseinheit 22 am zu montierenden Teil, z.B. einem Kfz-Chassis überwacht, liefert als fünftes Signal ein Überwachungssignal E.

Über die Antriebseinheit 13 des Förderbandes 12 wird ein sechstes Signal F mit Aussagen über den Stromfluss und die Rotationsgeschwindigkeit der Antriebseinheit erhalten.

Die gesamte Betriebsanlage 10 wird durch eine Steuereinrichtung 40 gesteuert, die in Fig. 2 schematisch dargestellt ist. Die Steuereinrichtung 40 hat einen leistungsfähigen Steuerungscomputer 42, insbesondere einen Hochleistungscomputer, der mit allen oben genannten anzusteuernden Komponenten der Betriebsanlage 10, d.h. mit der Antriebseinheit 13 des Förderbandes 12, mit allen Antriebsmotoren 28 des Montageroboters 14 als auch mit den elektrischen, hydraulischen oder pneumatischen Greifer- und Schrauberantrieben 23 der Betätigungseinheit 22 verbunden ist, um diese nach vorgegebenen Programmen in bekannter Weise anzusteuern. Der Steuerungscomputer 42 kann auch redundant vorgesehen sein, um die Ausfallsicherheit der Betriebsanlage 10 zu verbessern. Entsprechend der Ansteuerung der Betriebsanlage 10 durch die Steuerungseinrichtung erfolgt der Transport der zu montierenden Teile auf dem Förderband 12 in einer vorgegebenen Taktung und die Tätigkeit des Montageroboters 14 wird entsprechend synchronisiert.

Um die ordnungsgemäße Funktion der Betriebsanlage 10 sicherzustellen, ist der Steuerungscomputer 42 mit einem Fehlermodul 44 verbunden. Das Fehlermodul 44 kann auch im dem Steuerungscomputer 42 angeordnet oder mit diesem integriert sein. Die Steuerungseinrichtung verfügt darüber hinaus auch über eine Eingabetastatur 46 und ein Display 48, um mit der Steuereinrichtung 40 in Interaktion treten zu können. Anstelle fest montierter Komponenten kann die Eingabetastatur 46 und das Display 48 auch durch ein Laptop gebildet sein, das ein Servicetechniker bei sich trägt, und das er im Bedarfsfall mit dem Steuerungscomputer 42 verbindet, entweder kabelgebunden oder drahtlos oder über Internet. Statt eines Laptops können gegebenenfalls auch andere mobile Eingabe/Ausgabeeinheiten wie z.B. Smartphones als Eingabe/Ausgabeeinheiten verwendet werden. Die Eingabeeinheit und die Ausgabeeinheit müssen zudem nicht miteinander gekoppelt sein.

Die Steuerungseinrichtung 40, insbesondere das Fehlermodul 44 hat Eingänge für die Signalleitungen für die sechs oben beschriebenen Signale A - F. Auf diese Weise erhält das Fehlermodul 44 die Signale A bis F aller Antriebs- und Überwachungskomponenten.

Die Steuerungseinrichtung 40, hier beispielsweise das Fehlermodul 44, enthält eine Fehlererkennungsschaltung 50, die ständig die Signale aller Antriebe 13, 23 und 28 und Überwachungskomponenten 24, 26, 30 erfasst und über die Zeit aufzeichnet. Die Fehlererkennungsschaltung 50 enthält eine Vergleichsschaltung, die die Signale A-F, d.h. die Signalamplituden und/oder den zeitlichen Verlauf der Signalamplituden mit in einem Referenzwertspeicher 58 abgespeicherten Referenzwerten vergleicht und im Fall der Überschreitung wenigstens eines Referenzwertes ein Fehlersignal abgibt, was eine Unterbrechungsschaltung 52 dazu veranlasst, den Betrieb der Betriebsanlage 10 zu unterbrechen, d.h. alle Antriebe 13, 23, 28 abzuschalten. Die Fehlererkennungsschaltung 50 kann auch eine Fehlereingabeschaltung enthalten, die z.B. mit dem Signal B des Not-Aus Schalters 26 verbunden ist. Die Fehlereingabeschaltung kann darüber hinaus auch mit einer Eingabeschnittstelle des Steuerungscomputers 42 verbunden sein, z.B. mit der Tastatur 46, so dass Fehlerzustände als auch Fehlertypen über die Tastatur 46 oder externe Fehlermeldeeinrichtungen übermittelt werden und gegebenenfalls zu einer Betriebsunterbrechung führen können.

Falls seitens der Fehlerkennungsschaltung ein Fehlersignal abgegeben wurde, wird eine Aufzeichnungseinheit 54 im Fehlermodul 44 aktiviert, die alle an dem Steuerungscomputer 42 vorgenommenen Eingaben über die Tastatur 46 aufzeichnet. Zudem enthält die Aufzeichnungseinheit eine Kommentarfunktion, die es dem Servicetechniker ermöglicht, Tätigkeiten einzugeben, die er an der Betriebsanlage durchgeführt hat, um den Fehler zu beheben.

Das Fehlermodul 44 hat zudem eine Anweisungsschaltung 56, die bei Auftreten eines Fehlers den Fehlertyp aus dem Fehlersignal ausliest und die anschließend gespeicherten Eingabedaten selbsttätig diesem Fehlertyp zuordnet. In einer späteren Fehlersituation können dann diese einem Fehlertyp zugeordneten gespeicherten Eingabedaten als Ausgabedaten auf dem Display 48 zur Hilfestellung eines Servicetechnikers bei der Fehlerbehebung desselben Fehlertyps angezeigt werden. Dieser kann sich dann bei seiner Aktivität die bei einem bereits behobenen Fehlerfall gemachte Erfahrung zu eigen machen. Dies führt regelmäßig zu einer schnelleren Fehlerbehebung und damit zu geringeren Ausfallzeiten der Betriebsanlage.

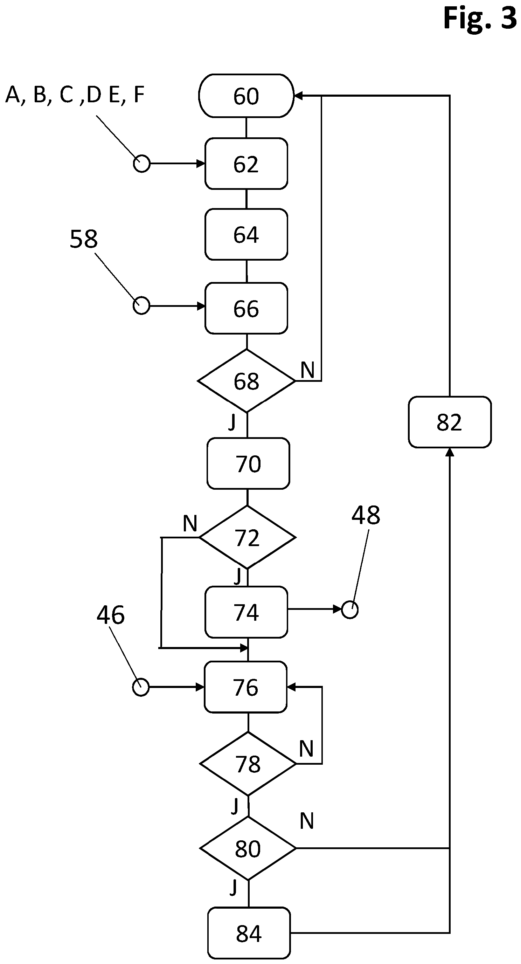

Ein beispielhafter Verfahrensablauf für die Ablaufüberwachung der in Fig. 1 gezeigten Anlage durch die Steuerungseinrichtung gemäß Fig. 2 ist in Fig. 3 wiedergegeben.

Schritt 60 bezeichnet den Start des Verfahrens. Im laufenden Betrieb der Betriebsanlage werden die Signale A - F der Antriebs- und Überwachungskomponenten der Betriebsanlage 10 in Schritt 62 eingelesen und in Schritt 64 abgespeichert. Die eingelesenen und abgespeicherten Signale A bis F werden nun in Schritt 66 mit Referenzwerten oder zeitlichen Referenzwertverläufen aus dem Referenzwertspeicher verglichen. Im Entscheidungsschritt 68 wird abgefragt, ob eine unzulässige Überschreitung/Unterschreitung eines Sollwertes oder Sollwertverlauf mindestens eines der Signale A bis F oder deren Kombination vorliegt.
Ist dies nicht der Fall, so verzweigt das Verfahren zurück zum Start 60.

Liegt eine Überschreitung vor, so wird in Schritt 70 ein Fehlersignal für ein Serviceteam generiert und die Betriebsanlage wird abgeschaltet.

Daraufhin wird in Schritt 72 abgefragt, ob bereits Eingabedaten für den aktuellen Fehlertyp vorhanden sind. Ist dies nicht der Fall, so wird der nächste Schritt 74 übersprungen. Ist dies der Fall, so werden in Schritt 74 die gespeicherten Eingabedaten aus einer früheren Fehlerbehebung des zugeordneten Fehlertyps auf dem Display 48 angezeigt. In Schritt 76 werden daraufhin die von dem Servicetechniker über die Tastatur 46 eingegebenen Eingabedaten eingelesen und korreliert zum Fehlertyp gespeichert.

In Schritt 78 wird daraufhin abgefragt, ob der Fehler behoben ist. Ist dies nicht der Fall, so verzweigt das Verfahren zurück zu Schritt 76. Ist der Fehler behoben, so wird in Schritt 80 abgefragt, ob vor der aktuellen Fehlersituation bereits Eingabedaten für den Fehlertyp vorhanden waren. Ist dies nicht der Fall, so wird die Betriebsanlage 10 wieder hochgefahren und das Verfahren verzweigt zurück zum Start 60.

Sind allerdings bereits für den Fehlertyp vor dem aktuellen Fehlerfall Eingabedaten abgespeichert gewesen, so werden in Schritt 84 diese alten Eingabedaten mit den aktuellen Eingabedaten unter der Prämisse verglichen, welche Daten zu einem schnelleren Hochfahren der Betriebsanlage 10 geführt haben. Diese optimierten Eingabedaten werden dann in der Aufzeichnungseinheit 54 abgespeichert und beim nächsten Fehlerfall desselben Fehlertyps in Schritt 74 auf dem Display 48 angezeigt. Das Verfahren verzweigt daraufhin zum Schritt 82, in welchem die Betriebsanlage 10 wieder hoch gefahren wird, woraufhin das Verfahren in Schritt 60 wieder neu gestartet wird.

Mit diesem Verfahren lässt sich somit eine schnellere Reparatur einer Betriebsanlage realisieren, was deren Ausfallzeiten deutlich verringert, und die qualitativen Anforderungen an die Servicetechniker reduziert.

Alternativ könnten statt der in Schritt 84 vorgenommenen Optimierung der Eingabedaten auch die Eingabedaten aus mehreren unterschiedlichen Fehlersituationen nebeneinander zusammen mit der Zeit bis zum erneuten Hochfahren der Betriebsanlage und/oder der Reparaturzeit angezeigt werden, womit es dem Servicetechniker überlassen bliebe, welchen Weg er wählt. Dies würde dem Servicetechniker ein wenig mehr Entscheidungsspielraum bei der Behebung des Fehlers lassen.

Die Erfindung ist nicht auf das beschriebene Ausführungsbeispiel begrenzt, sondern kann innerhalb des Schutzbereichs der beiliegenden Patentansprüche variiert werden.

### Bezugszeichenliste:

- 10: Betriebsanlage
- 12: Förderband
- 13: Antriebseinheit des Förderbands - Antriebsmotor
- 14: Montageroboter
- 16: um eine vertikale Achse drehbarer Basiskörper des Montageroboters
- 18: erster Schwenkarm des Montageroboters
- 20: zweiter Schwenkarm des Montageroboters
- 22: Betätigungseinheit
- 23: Antriebe der Betätigungseinheit (Greifer- und Schrauberantriebe)
- 24: optischer Sensor zur Taktüberwachung
- 26: Not-Aus Schalter
- 28: Betätigungsmotoren des Montageroboters
- 30: Überwachungssensor für die Tätigkeit der Bearbeitungseinheit - Positionssensor(en)
- 40: Steuerungseinrichtung
- 42: Steuerungscomputer - Hochleistungscomputer, möglichst redundant aufgebaut
- 44: Fehlermodul
- 46: Eingabetastatur
- 48: Display
- 50: Fehlererkennungsschaltung
- 52: Unterbrechungsschaltung
- 54: Aufzeichnungseinheit
- 56: Anweisungsschaltung
- 58: Referenzwertspeicher
- 60-84: Schritte eines Verfahrensablaufs des erfindungsgemäßen Verfahrens
- 60: Verfahrensstart
- 62: Einlesen der Signalwerte A bis F
- 64: Speichern der Signalwerte
- 66: Einlesen der Referenzwerte aus dem Referenzwertspeicher und Vergleich der Signalwerte oder Signalwertverläufe mit den Referenzwerten
- 68: Abfrage auf unzulässige Referenzwertüberschreitung mit Zurückverzweigung auf Start bei Nicht-Vorliegen eines Fehlers
- 70: Generierung eines Fehlersignals für ein Serviceteam und Abschaltung der Betriebsanlage
- 72: Abfrage, ob Eingabedaten für den aktuellen Fehlertyp vorhanden sind. Wenn nein, Sprung zu Schritt 76
- 74: Anzeige der gespeicherten Eingabedaten für den Fehlertyp aus einem zurückliegenden Fehlerfall
- 76: Einlesen der Eingabedaten von der Tastatur 46
- 78: Abfrage, ob Fehler behoben. Wenn nein, Zurückverzweigung auf Schritt 76
- 80: Abspeichern der verstrichenen Zeit bis zum Beheben der Fehlersituation zusammen mit den Eingabedaten und Hochfahren der Betriebsanlage in Schritt 82 mit Rückkehr des Verfahrens zurück zum Start 60
- 82: Wieder-Hochfahren der Betriebsanlage 10
- 84: Vergleich der aktuellen Eingabedaten mit den bereits vorhandenen Eingabedaten zu demselben Fehlertyp und Abspeicherung der Eingabedaten mit der kürzesten Bearbeitungszeit des Servicetechnikers und/oder mit der kürzesten Betriebsunterbrechung
- A: erstes Signal - optischer Taktsensor
- B: zweites Signal - Not-Aus Signal
- C: drittes Signal - Betätigungs- und Funktionssignale aller Antriebe der Betätigungseinheit
- D: viertes Signal - Betätigungs- und Funktionssignale aller Antriebe des Montageroboters
- E: fünftes Signal - Signal des Überwachungssensors
- F: sechstes Signal - Betätigungs- und Funktionssignale der Antriebseinheit des Förderbandes
- x: Förderrichtung

## Patentansprüche

1. Steuerungseinrichtung (40) einer Betriebsanlage (10), welche Steuerungseinrichtung (40) folgende Merkmale aufweist:
- einen Steuerungscomputer (42) mit Eingängen für Signalleitungen von Antrieben (13, 23, 28) und/oder Sensoren (24, 30) der Betriebsanlage (10),
- eine mit dem Steuerungscomputer (42) verbundene Eingabe/Ausgabevorrichtung (46, 48) für die Bedienung der Steuerungseinrichtung (40),
- ein mit dem Steuerungscomputer (42) verbundenes Fehlermodul (44) mit:
- einer Fehlererkennungsschaltung (50), die konzipiert ist, Signale (A - F) auf den Signalleitungen über die Zeit aufzuzeichnen, und die Signale (A - F) und/oder den Signalverlauf über die Zeit mit in einem Referenzwertspeicher (58) abgespeicherten Referenzwerten zu vergleichen und bei Überschreitung der Referenzwerte ein Fehlersignal auszugeben, welches vorzugsweise einen Fehlertyp mit Aussagen zur Art des Signals und der Art der Überschreitung des Referenzwerts enthält,
- eine Unterbrechungsschaltung (52), die mit den Antrieben (13, 23, 28) der Anlage verbunden und konzipiert ist, nach Erhalt des Fehlersignals den automatischen Betrieb der Betriebsanlage (10) zu unterbrechen,
- mit einer Aufzeichnungseinheit (54), die konzipiert ist, im Fall der Unterbrechung des automatischen Betriebs der Betriebsanlage (10) zumindest einige, vorzugsweise alle von einer Person über die Eingabe/Ausgabevorrichtung (46, 48) eingegebenen Eingabedaten bis zum erneuten Start der automatischen Steuerung der Betriebsanlage (10) zu erfassen und verknüpft mit einem/dem Fehlertyp abzuspeichern,
- mit einer Anweisungsschaltung (56), die konzipiert ist, bei Auftreten eines Fehlers aus dem Fehlersignal oder aus der Eingabe/Ausgabevorrichtung den Fehlertyp zu erhalten und die diesem Fehlertyp zugeordneten gespeicherten Eingabedaten als Ausgabedaten auf der Eingabe/Ausgabevorrichtung (46, 48) anzuzeigen.

2. Steuerungseinrichtung (40) nach Anspruch 1, **dadurch gekennzeichnet, dass** die Fehlererkennungsschaltung (50) konzipiert ist, Signale (A - F) betreffend die Stromaufnahme und/oder Geschwindigkeit der Antriebe (13, 23, 28) und/oder betreffend den zeitlichen Ablauf dieser Signale (A - F) zu erhalten und zu verarbeiten.

3. Steuerungseinrichtung (40) nach einem der vorhergehenden Ansprüche, **dadurch gekennzeichnet, dass** sie Eingänge für optische Sensoren (24, 30) aufweist, die im Bereich der Betriebsanlage (10) angeordnet sind.

4. Steuerungseinrichtung (40) nach einem der vorhergehenden Ansprüche, **dadurch gekennzeichnet, dass** die Eingabe/Ausgabevorrichtung (46, 48) durch ein Display (48) und eine Tastatur (46) gebildet ist.

5. Steuerungseinrichtung (40) nach einem der vorhergehenden Ansprüche, **dadurch gekennzeichnet, dass** das Fehlermodul (44) konzipiert ist, im Fehlerfall die Eingabe/Ausgabevorrichtung (46, 48) freizuschalten, um einer Person die Eingabe von Textdaten in Zusammenhang mit einer Fehlerbehebung zu ermöglichen, und die Aufzeichnungseinheit (54) konzipiert ist, die eingegebenen Textdaten zusammen mit den Eingabedaten korreliert zum Fehlertyp und vorzugsweise mit Zeitdaten abzuspeichern und in einer späteren Fehlersituation als Ausgabedaten anzuzeigen.

6. Steuerungseinrichtung (40) nach einem der vorhergehenden Ansprüche, **dadurch gekennzeichnet, dass** das Fehlermodul (44) mit einer Bewertungsschaltung versehen ist, die konzipiert ist, die Eingabedaten von Fehlersituationen des gleichen Fehlertyps miteinander zu vergleichen (84) und als Ausgabedaten diejenigen Eingabedaten zu verwenden, die mit den wenigsten Schritten und/oder in kürzester Zeit zu einem erneuten Start der automatischen Steuerung der Betriebsanlage (10) geführt haben.

7. Steuerungseinrichtung (40) nach einem der vorhergehenden Ansprüche, **dadurch gekennzeichnet, dass** das Fehlermodul (44) konzipiert ist, Signale (A - F), Signalabweichungen und/oder deren Kombination mit bestimmten Fehlertypen zu korrelieren.

8. Betriebsanlage (10) mit einer Steuerungseinrichtung (40) nach einem der vorhergehenden Ansprüche, welche Betriebsanlage (10) Antriebe (13, 23, 28) und optische Sensoren (24, 30) umfasst, die mit der Steuerungseinrichtung (40) verbunden sind.

9. Betriebsanlage (10) nach Anspruch 8, **dadurch gekennzeichnet, dass** sie eine Montagestraße für die Montage von Kraftfahrzeugen oder Kraftfahrzeugteilen ist.

10. Betriebsanlage (10) nach Anspruch 8 oder 9, **dadurch gekennzeichnet, dass** sie Förderantriebe und Montageantriebe (13, 23, 28) und Überwachungssensoren (24, 30) enthält, die über die Signalleitungen mit der Steuerungseinrichtung (40) verbunden sind.

11. Verfahren zur Steuerung einer Betriebsanlage (10), in welchem Signale (A - F) von Antrieben (13, 23, 28) und/oder Sensoren (24, 30) der Betriebsanlage (10) erfasst und mit Referenzwerten verglichen werden, wobei bei Überschreitung der Signale (A - F) der automatische Betrieb der Betriebsanlage (10) unterbrochen und ein Fehlersignal ausgegeben wird, wobei entweder das Fehlersignal einen Fehlertyp mit Aussagen zur Art des Signals/Signale (A - F) und der Art der Überschreitung/en enthält oder ein Fehlertyp über eine Eingabe/Ausgabevorrichtung (46, 48) eingegeben wird, wobei im Fall der Unterbrechung des automatischen Betriebs der Betriebsanlage (10)
- alle von einer Person über die Eingabe/Ausgabevorrichtung (46, 48) eingegebenen Eingabedaten bis zum erneuten Start der automatischen Steuerung der Betriebsanlage (10) korreliert zum Fehlertyp erfasst und gespeichert werden, und
- die dem Fehlertyp zugeordneten gespeicherten Eingabedaten als Ausgabedaten auf der Eingabe/Ausgabevorrichtung angezeigt werden.

12. Verfahren nach Anspruch 11, **dadurch gekennzeichnet, dass** die Signale (A - F) über die Zeit erfasst und mit zeitlichen Referenzverläufen zur Ableitung eines Fehlersignals und/oder zur Erkennung eines Fehlertyps verglichen werden.

13. Verfahren nach Anspruch 11 oder 12, **dadurch gekennzeichnet, dass** die abgespeicherten Eingabedaten von Fehlersituationen des gleichen Fehlertyps miteinander verglichen werden und für zukünftige Fehlersituationen dieses Fehlertyps diejenigen Eingabedaten als Ausgabedaten verwendet werden, die mit den wenigsten Schritten und/oder in kürzester Zeit zu einem erneuten Start der automatischen Steuerung der Betriebsanlage (10) geführt haben.

14. Verfahren nach einem der Ansprüche 11 bis 13, **dadurch gekennzeichnet, dass** in einer Fehlersituation die Eingabe von Textdaten über die Eingabe/Ausgabevorrichtung (46, 48) ermöglicht wird, welche Textdaten zusammen mit den Eingabedaten abgespeichert werden und in einer späteren Fehlersituation als Text-Ausgabedaten auf der Eingabe/Ausgabevorrichtung (46, 48) wiedergegeben werden.

15. Verfahren nach einem der Ansprüche 11 bis 14, **dadurch gekennzeichnet, dass** aus den Signalen (A - F), Signalüberschreitungen, Signalverläufen und deren Kombinationen der Fehlertyp bestimmt wird.
